# EUROPEAN PATENT SPECIFICATION

(11) **EP 0 570 688 B1**
(45) Date of publication and mention of the grant of the patent: **12.03.1997**
(21) Application number: 93105408.4
(22) Date of filing: 01.04.1993
(51) Int. Cl.: H02B 13/01

(54) **Switch gear**
Schaltgerät
Appareil de coupure

(30) Priority: 15.05.1992 JP 122403/92
(43) Date of publication of application: 24.11.1993
(73) Proprietor: KABUSHIKI KAISHA TOSHIBA, Kawasaki-shi, Kanagawa-ken 210 (JP)
(72) Inventor: Yoshida, Tetsuo, Tokyo-to (JP); Miyagawa, Masaru, Tokyo-to (JP); Masaki, Nobuo, Tokyo-to (JP); Kaneko, Eiji, Yokohama-shi, Kanagawa-ken (JP); Waku, Keiji, Chiba-ken (JP); Nagata, Takafumi, Chiba-ken (JP)
(74) Representative: Lehn, Werner, Dipl.-Ing.

(56) References cited:
- DE-A- 3 331 616
- DE-B- 1 161 624
- DE-B- 1 440 163
- DE-C- 3 619 789
- DE-U- 7 208 566
- DE-U- 7 301 690
- FR-A- 2 576 718
- LEISTUNGSSCHAU DES STABILEN FORTSCHRITTS, Teil II, Elektrotechnik, ENERGIE (München, DE), vol. 11, no. 7, July 1959, page 324-331

## Description

### BACKGROUND OF THE INVENTION

### 1. Field of the Invention

The present invention relates to a switch gear according to the preamble of claim 1 and to a switch gear according to the preamble of claim 2.

### 2. Description of the Related Art

A switch gear according to the preamble of claim 1 is known from DE-U-7 301 690.

A switch gear according to the preamble of claim 2 is known from DE-A-3 331 616.

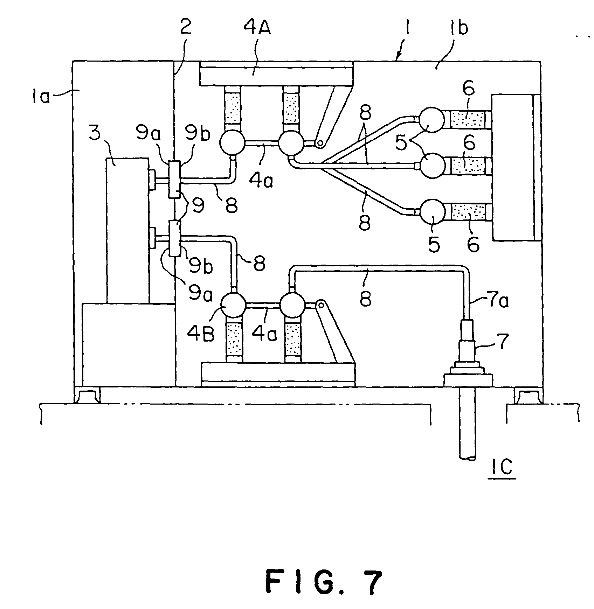

More specifically, a conventional switch gear is described hereinafter with reference to Fig. 7 of the drawings. Fig. 7 is a right side view of said conventional switch gear installed in a power receiving and distributing facility. In the figure, a casing 1 is covered by a soft steel plate. The inside of the casing 1 is partitioned by a partition wall 2 so that a circuit breaker chamber 1a and a bus chamber 1b are formed at the front of the partition plate 2 and at the rear thereof, respectively. The circuit breaker chamber la accommodates a vacuum circuit breaker 3. On the partition wall 2, insulation spacers 9 are disposed at an upper position and a lower position thereof. Main circuit conductors are disposed at the rear of the vacuum circuit breaker 3. The main circuit conductors are connected to front terminals 9a of the insulation spacers 9.

At a ceiling portion of the bus chamber 1b, disconnecting switches 4A for three phases are disposed in the direction perpendicular to the view of the figure. At a bottom portion of the bus chamber 1b, disconnecting switches 4B for three phases are disposed. The model and ratings of the disconnecting switches 4B are the same as those of the disconnecting switches 4A. Each disconnecting switch 4A has a terminal portion disposed at the front thereof. The terminal portion is connected to a rear terminal 9b of an insulation spacer 9 with a L-shaped connection conductor 8. On the other hand, each disconnecting switch 4B has a terminal portion disposed at the front thereof. The terminal portion is connected to a terminal 9b of an insulation spacer 9 with an, L-shaped connection conductor 8.

On the rear wall of the bus chamber 1b, buses 5 are disposed through insulators 6 in the direction perpendicular to the view of the figure. Each bus 5 is connected to a rear terminal of the disconnecting switch 4A with a connection conductor 8. At the rear of the floor of the bus chamber 1b, a cable 7 extends upward from a pit 1c. A cable head 7a at the upper end of the cable 7 is connected to the rear terminal of the connecting switch 4B with a connection conductor 8.

The circuit breaker chamber 1a and the bus chamber 1b are filled with sulfur hexafluoride gas (hereinafter, referred to as SF₆ gas).

The SF₆ gas allows the insulation distance between each phase of the disconnecting switches 4A and 4B of the bus chamber 1b, each phase of the buses 5, and the grounding metal to be decreased. Thus, the size and the installation area of the casing 1 can be reduced.

However, according to the switch gear with the above construction, when each of the disconnecting switches 4A and 4B shuts off a charging current in an unloaded condition, a weak arc occurs. This arc dissolves SF₄ gas and thereby a cracked gas is generated. This cracked gas is likely to damage the surface of epoxy resin used for the disconnecting switches 4A and 4B and the buses 5. Thus, the withstand voltages of the disconnecting switches 4A and 4B and the buses 5 against the ground are lowered. As a result, in a long time operation of the facility, a tracking due to corona discharge will stretch, resulting in grounding trouble.

To prevent such trouble, a construction wherein a cracked gas absorbing device is mounted on the housing 1 can be used. However, in this construction, the absorbent for use with the device should be periodically replaced with a new one. Thus, the maintenance of the facility becomes complicated. In addition, if a trouble takes place in a part of electric device, an arc which occurred therein may adversely cause trouble in the adjacent electric devices. Moreover, in a non-uniform electric field, the withstand voltages of the SF6 gas tend to degrade extremely. Thus, the radius of curvature of each corner of the exposed charging portion of the disconnecting switches 4A and 4B should be increased. Thus, the number of production steps increases. In addition, the size of the electric devices may become large.

### SUMMARY OF THE INVENTION

An object of the present invention is to provide a switch gear according to the preamble of claim 1 or claim 2, respectively, which switch gear is small in size, easily maintained and free of propagation of a local trouble.

According to the present invention, this object is solved by providing in such a switch gear features according to the characterizing part of claim 1 or 2, respectively.

Further improvements of a switch gear according to the present invention are specified in the claims 3 to 6.

The present invention in a first aspect thereof provides a switch gear comprising a plurality of device chambers adjacently disposed, each of which has a main circuit device therewithin, a connection cable disposed outside the device chambers, and a disconnecting part, disposed on a wall of each of the device chambers, for connecting said main circuit device and the connection cable, wherein device elements for three phases of the main circuit device are integrally formed, the device elements being sealed with solid insulators.

The present invention in a second aspect thereof provides a switch gear, comprising a plurality of main circuit devices adjacently disposed, each of which has device elements for three phases integrally formed, each of the device elements being sealed by a solid insulator, wherein each of the main circuit devices has a fitting portion fitted to each device element, the fitting portion having a female side fitting portion and a female side fitting portion, and wherein the male side and male side fitting portions of each of the main circuit devices are fitted to the male side fitting portion of one of the adjacent main circuit devices and the male side fitting portion of the other of the adjacent main circuit devices, respectively.

Other objects, features and advantages of the present invention will become more apparent in light of the following detailed description of best mode embodiments thereof, as illustrated in the accompanying drawings.

### BRIEF DESCRIPTION OF DRAWINGS

Fig. 1 is a side view showing a switch gear according to a first embodiment of the present invention;
Fig. 2 is a partial enlarged vertical sectional view showing the switch gear according to the present invention;
Fig. 3 is a partial enlarged vertical sectional view showing principal parts of the switch gear according to the present invention;
Fig. 4A is a front view showing a switch gear according to a second embodiment of the present invention;
Fig. 4B is a connection diagram showing a main circuit single line of the second embodiment;
Fig. 5 is a partial enlarged view showing the switch gear according to the second embodiment of the present invention;
Fig. 6 is a partial sectional view showing principal parts of the switch gear according to the present invention; and
Fig. 7 is a right side view showing a switch gear of the prior art.

### DESCRIPTION OF PREFERRED EMBODIMENTS

### First Embodiment

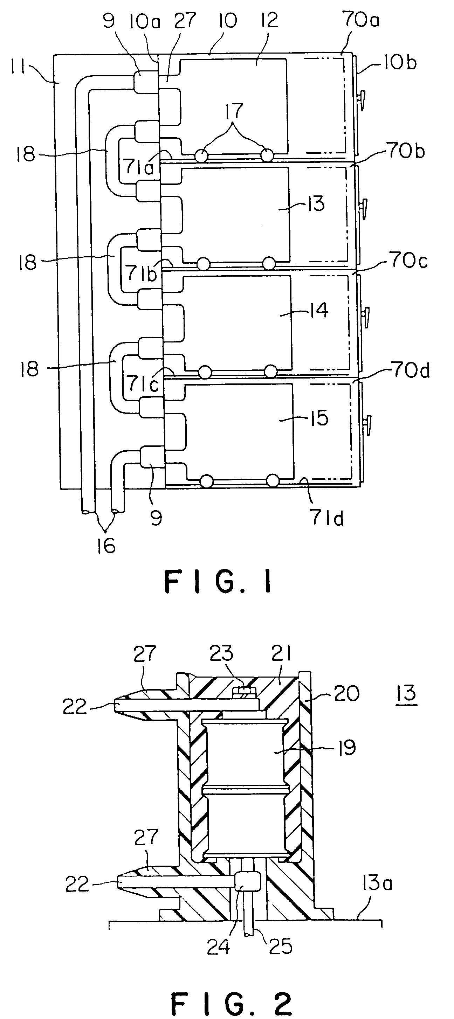

Next, with reference to Figs. 1, 2, and 3 of the accompanying drawings, a switch gear according to a first embodiment of the present invention will be described.

In Fig. 1, the interior of a housing 10 is partitioned by a partition wall 10a. The space to the rear of the partition wall 10a is a cable chamber 11. The space to the front of the partition wall 10a has four device chambers 70a to 70d which are stacked vertically. At the front end of each device chamber 70a to 70d, a front door 10b is provided. Inside the device chambers 70a to 70d, drawer rails 71a to 71d are disposed, respectively. Inside the device chambers 70a to 70d, a disconnecting switch 12, a vacuum circuit breaker 13, an insulation disconnecting switch 14, and a transformer unit 15 are installed, respectively, each of which is integrally formed together with an insulator. The shape of the disconnecting switch 14 is the same as that of the disconnecting switch 12. The disconnecting switch 12, the vacuum circuit breaker 13, the disconnecting switch 14, and the transformer unit 15 are movable by respective wheels rolling on the respective drawer rails 71a to 71d.

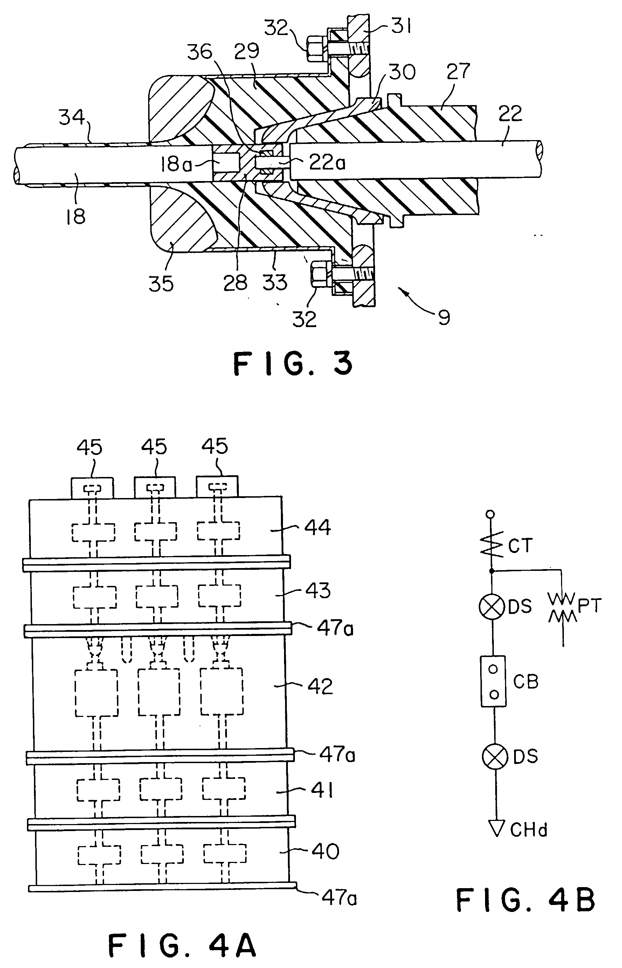

On the partition wall 10a of the cable chamber 11, disconnecting parts 9 which will be described later are disposed. Each disconnecting part 9 passes through the partition wall 10a and is connected to the rear end of a respective one of the device chambers 70a to 70d. The upper disconnecting part 9 of the uppermost device chamber 70a is connected to a high pressure bridge polyethylene cable 16 (hereinafter referred to as cable 16). In addition, the lower disconnecting part 9 of the lowest device chamber 70d is connected to another cable 16. The cables 16 extend upwardly from an installation floor of the housing 10. The vertically adjacent disconnecting part 9 of each pair of vertically adjacent device chambers are connected by an U-shaped short cable 18. Thus, as shown in the connection diagram of a main circuit single line of Fig. 4B, the disconnecting switch 12, the vacuum circuit breaker 13, the disconnecting switch 14, and the transformer unit 15 accommodated in the four device chambers vertically disposed are connected in series.

Fig. 2 is a vertical sectional view showing major parts of the vacuum circuit breaker 13. In the figure, on a movable side unit 13a, an insulation cylinder having three insulation cylinder portions is disposed in the direction perpendicular to the view of the figure. The insulation cylinder portions are made of epoxy resin. The insulation cylinder 20 is provided with a flange disposed at the lower end of the vacuum circuit breaker 13. As shown in Fig. 2, the insulation cylinder 20 has two insulation layers 27 which protrude leftwards. These insulation layers 27 are male members of the disconnecting parts 9 shown in Fig. 1. In each insulation layer 27, a connection conductor 22 is preembedded.

The insulation cylinder 20 accommodates a vacuum valve 19 as a device element. The vicinity of the vacuum valve 19 and the inside of the insulation cylinder 20 are filled with a soft epoxy resin 21 containing a hardener whose mixing ratio is small. A plate at the upper end of the vacuum valve 19 is connected to the rear end of the connection conductor 22 with a bolt 23. A moving side power conduction shaft is disposed at the lower end of the vacuum valve 19. At the lower end of the moving side power conduction shaft, an annular contacting ring 24 is disposed. The left end of the contacting ring 24 is connected to the rear end of the lower connection conductor 22. The upper end of an insulation operation rod 25 passes through the contacting ring 24 which is connected to the moving side power conduction shaft. The lower end (not shown) of the insulation operation rod 25 is connected to an operation mechanism (not shown). The operation mechanism is connected to the moving unit 13a.

Fig. 3 is a detail vertical sectional view showing the disconnecting part 9. As shown in the figure, on the cable chamber side of the flange 31 formed at each disconnecting part 9 of the partition wall 10a shown in Fig. 1, a female member of the disconnecting part 9 in a substantially convex shape is fixed with a bolt 32. The female member of the disconnecting part 9 is constructed of an insulation layer 29, a thin grounding layer 33, a ring-shaped electric field alleviating layer 35, a connection conductor 28 provided at the center of the insulating layer 29, and a silicone gel layer 30. The insulation layer 29 is formed of cast epoxy resin in a substantially convex shape. The grounding layer 33 is formed on the outer periphery of the insulation layer 29. The electric field alleviating layer 35 is formed of cast conductive rubber at the end of the insulation layer 29. The connection conductor 28 is embedded at the center of axis of the inside of the insulation layer 29. The silicone gel layer 30 is rightwardly inserted into an opening formed in a circular truncated cone shape on the right of the insulation layer 29.

In the insulation layer 29, a center conductor 28 is preembeded. The center conductor 28 has a left pipe portion and a right pipe portion. On the inner periphery of the right pipe portion, a groove is formed. In this groove, a contacting ring 36 is inserted. The contacting ring 36 is fitted to a male side contacting portion 22a disposed at the forward end of the connection conductor 22. In a ring portion on the left of the center conductor 28, a lead 18a of the cable 18 is inserted and caulked. On the outer periphery of the cable 18 protruding from the electric field alleviating layer 35, a grounding layer 34 is formed.

As described above, according to the switch gear comprising the disconnecting part 9, the disconnecting switches 12 and 14 (which are main circuit devices), the vacuum circuit breaker 13, and the transformer unit 15, since the outer periphery of the main circuit devices for three phases, instrumental current transformer, and instrumental voltage transformer are covered by cast epoxy resin, the outer size of the switch gear can be decreased. In addition, in each disconnecting part 9, the silicone gel layer 30 is airtightly disposed between the male and female members thereof. Thus, when each main circuit device is moved from the open position to the close position, the disconnecting part 9 is pressed. As a result, the withstand voltages between the flanges 31 of the grounding metal plates and between each phase can be increased.

Since the main circuit devices 12 to 15 and the cables 18 can be independently attached and detached, they can be easily maintained and inspected. Thus, only a required portion can be replaced in a short time. In addition, the grounding layer 34 is formed on the outer periphery of each cable 18. The grounding layer 33 is formed on the outer periphery of the insulation layer 29. Thus, even if dust adheres to the insulation layer 29 in a long time operation of the power receiving and distributing facility, the insulation characteristic thereof does not deteriorate. When a main circuit device is replaced for maintenance or inspection, the silicone gel layer 30 is removed from the front thereof and replaced with a new one so as to keep the female side insulation layer 29 and the male side insulation layer 27 closely sealed.

According to the switch gear of the first embodiment, the device chambers accommodating the main circuit devices, containing vertically stacked in the housing, and the disconnecting parts are disposed in the rear of the device chambers for connecting and disconnecting the main circuit devices. The device chambers have the main circuit devices, containing for three phases which are integrally formed together with solid insulation parts.

Otherwise, the three phases of the main circuit devices may be formed independently to each other with solid insulation parts.

In addition, since each disconnecting part is constructed of the female side disconnecting part with the female side contacting portion formed at the center of axis of the female insulation layer and the male side disconnecting part with the female side contacting portion formed at the center of axis of the male insulating layer, the size of the disconnecting part can be reduced. Thus, the outer size of the switch gear is decreased. In addition, only a required portion can be inspected and replaced. As a result, the switch gear can be easily maintained.

### Second Embodiment

Fig. 4A is a front view showing a switch gear of a second embodiment according to the present invention. In the figure, the switch gear comprises a cable head unit 40, a disconnecting switch unit 41, a vacuum circuit breaker 42, a disconnecting switch unit 43, a transformer unit 44, and three bus units 45, the outer peripheries of all units being integrally formed together with cast epoxy resin. The cable head unit 40 has left, right, upper, and lower flange portions 47a at the outer periphery thereof. The disconnecting switch unit 41 is disposed over the cable head unit 40 and has three disconnecting switches. The shape of the disconnecting switch unit 41 is the same as that of the cable head unit 40. The vacuum circuit breaker 42 is disposed over the disconnecting switch unit 41. The vacuum circuit breaker 42 has three vacuum valves. The disconnecting switch unit 43 is disposed over the vacuum circuit breaker 42. The shape of the disconnecting switch unit 43 is the same as that of the disconnecting switch unit 41. The transformer unit 44 is disposed over the disconnecting switch unit 43. The transformer unit 44 has an instrumental voltage transformer and two instrumental current transformers. The bus units 45 are disposed over the transformer unit 44. Fig. 4B is a connection diagram of a main circuit single line of the switch gear of Fig. 4A. The bus units 45 are disposed on a power side, whereas the cable head unit 40 (denoted by CHd in the connection diagram) is disposed on a load side.

These units are connected with male and female fitting portions of center conductors of each main circuit which will be described later. In addition, each unit is connected with the flange portions 47a horizontally formed. Moreover, each unit is fixed to a mounting base (not shown) of an installation floor with the flange portion 47a disposed at the lower end of the cable head unit 40. At a rear portion of the vacuum circuit breaker 42 and on rear portions of the disconnecting units 41 and 43, operation portions (not shown) are disposed.

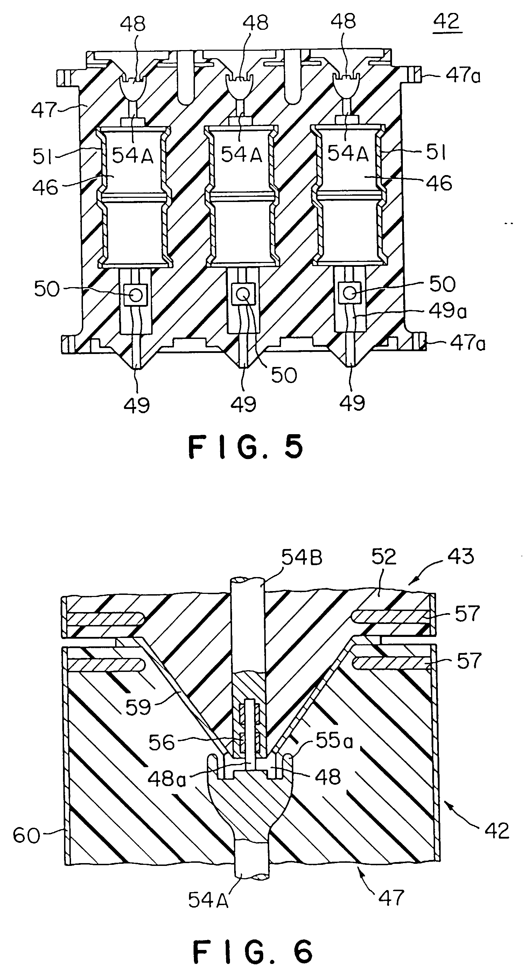

Fig. 5 is an enlarged vertical sectional view showing the vacuum circuit breaker 42. In the figure, on the outer periphery of a pipe portion of each vacuum valve (device element) 46, an electric field alleviating layer 51 made of urethane rubber is formed. At the lower end of a moving side power conduction shaft of the vacuum valve 46, an operation pipe 50 is connected. The operation pipe 50 is connected to the upper end of a flexible conductor 49a. The lower end of the flexible conductor 49a is fitted to the upper end of the lower center conductor 49. The lower end of the lower center conductor 49 is a male side fitting portion.

On the fixed side of the vacuum valve 51, the lower end of the fixed side center conductor 54A is connected. As shown in Fig. 6, the upper end of the fixed side center conductor 54A is a connection electrode 48 in a substantially tulip shape. This connection electrode 48 partially forms a female fitting portion which will be described later (see Fig. 6). Each vacuum valve 46 covered by the electric field alleviating layer 51 is integrally embedded in an insulation layer 47 formed of cast epoxy resin.

Fig. 6 is an enlarged view showing the female side fitting portion for one phase disposed at the upper end of the vacuum circuit breaker 42 and the male side fitting portion for one phase disposed at the lower end of the disconnecting switch unit 43. At the center of axis of the connection electrode 48 disposed at the upper end of the fixed side center conductor 54A, a small-diameter connection rod 48a protrudes. On the outer periphery of the fixed side center conductor 54A, a ring-shaped electric field alleviating portion 55a is formed. On the insulation layer 47 disposed on the outer periphery of the fixed side center conductor 54A, an inverse-cone-shaped concave portion whose center of axis is the connection rod 48a of the connection electrode 48 is formed. On the outer periphery of the insulation layer 47 disposed about the connection electrode 48, a thin grounding layer 60 is formed. On the outer periphery at the upper end of the concave portion, an electric field alleviating ring 57 is preembedded.

The female side fitting portion is fitted to the male side fitting portion of the disconnecting switch unit 43 disposed over the vacuum circuit breaker 42. At the center of axis of a downwardly protruded insulation layer 52 in an inversely circular truncated cone shape, a load side center conductor 54B of the disconnecting switch unit 43 is preembedded. At the lower end of the load side center conductor 54B, a pipe portion is formed. In the inner periphery of the pipe portion, a pair of contacting rings 56 are inserted. Through the contacting rings 56, the fixed side center conductor 54A of the vacuum circuit breaker 42 is connected to the load side center conductor 54B of the disconnecting switch unit 43. Through the contacting rings 56, the fixed side center conductor 54A of the vacuum circuit breaker 42 is connected to the load side center conductor 54B of the disconnecting switch unit 43.

On the outer periphery of the insulation layer 52, a grounding layer 60 is also formed. In the outer periphery of a base portion in a circular truncated cone shape, an electric field alleviating ring 57 is preembedded. Between a convex portion in a circular truncated cone shape at the lower end of the disconnecting switch unit 43 and a concave portion in a circular truncated cone shape at the upper end of the vacuum circuit breaker 42, an insulation layer 59 in an inversely circular truncated cone shape made of EP rubber coated with silicone gel is downwardly inserted.

At upper end portions of the disconnecting switches 41 and 43, the cable head unit 40, and the transformer unit 44 which are shown in Fig. 4A, respective female side fitting portions shown in the lower half of Fig. 6 are formed. On the other hand, at lower end portions of the vacuum circuit breaker 42, the disconnecting switch units 41 and 43, the cable head unit 40, and the transformer unit 44, respective male side fitting portions shown in the upper half of Fig. 6 are formed.

As described above, according to the switch gear comprising the cable head unit 40, the disconnecting switch units 41 and 43, the vacuum circuit breaker 42, and the transformer unit 44, each unit is vertically stacked one upon the other. In addition, the outer peripheries of all units are integrally formed together with cast epoxy resin. Thus, the outer size of each unit can be decreased. In addition, when each unit is stacked, since the corresponding male and female fitting portions are fitted, each unit is connected. On the contacting surface of the insulation layer of each fitting portion, EP rubber coated with silicone gel causes the upper and lower flange portions 47a to be compressed. Thus, each fitting portion is closely contacted. As a result, the withstand voltage between the grounding voltage and each phase can be maintained for a long time.

Moreover, since the outer periphery of each unit is integrally formed along with epoxy resin, even if a trouble occurs in one unit, it does not adversely affect other units. When a unit which is defective is replaced, a gas charging operation is not required as opposed to a gas insulation switch gear. Thus, the replacement can be completed quickly. Furthermore, since a grounding layer is formed on the outer periphery of an insulation layer made of epoxy resin, the insulation can be maintained for a long time even if dust adheres to the insulation layer after the installation of the switch gear.

In this embodiment, the lower portion of the upper unit was defined as the male side, whereas the upper portion of the lower unit was defined as the female side. However, it should be noted that the male side and the female side can be inversely defined. In addition, the units can be disposed horizontally rather than vertically.

According to the second embodiment, since the main circuit electric devices for three phases formed integrally along with solid insulator and a fitting portion in which a center conductor is embedded and having male and female type insulation layers are provided, the distance between each phase of the main circuit devices and the grounding voltage can be decreased. Thus, the outer size of the switch gear can be reduced. Even if a trouble arises, it does not adversely affect other circuit devices.

Otherwise, the three phases of the main circuit devices may be formed independently to each other with solid insulation parts.

As described above, according to the present invention, the main circuit electric devices for three phases which are integrally formed along with solid insulator are closely disposed in succession and each adjacent unit of the main circuit electric units has fitting portions which fit the center conductor of each main circuit electric device. In addition, the fitting portions are filled with liquid carbon fluoride. Thus, the distance between each phase of the main circuit devices and the distance between each phase and the grounding voltage can be decreased. Thus, the outer size of the switch gear can be reduced. Even if a trouble occurs, it does not adversely affect other main circuit devices. Thus, the switch gear which effectively cools the fitting portions, has a small outer size, and prevents trouble in one unit from adversely affecting other units can be obtained.

Although the present invention has been shown and described with respect to a best mode embodiment thereof, it should be understood by those skilled in the art that the foregoing and various other changes, omissions, and additions in the form and detail thereof may be made therein without departing form the scope of the present invention as defined in the claims.

Otherwise, the three phases of the main circuit devices may be formed independently to each other with solid insulation parts.

## Claims

1. A switch gear, comprising
a plurality of device chambers (70a-70d) adjacently disposed;
a main circuit device (12-15) disposed within each of said device chambers (70a-70d);
device elements (19) formed integrally or independently to each other within said circuit devices (12-15);
a connection cable (16, 18) disposed outside said device chambers (70a-70d) ; and
disconnecting parts (9) disposed on each of said main circuit devices (12-15);
**characterized** by
each of said device elements (19) being for three phases and being sealed with solid insulators (21) ; and
further disconnecting parts (9) disposed on a wall of each of said device chambers (70a-70d), said disconnecting parts and said further disconnecting parts being provided for connecting said man circuit devices (12-15) and said connecting cabe (16, 18) and having a female side disconnecting part and a male side disconnecting part; wherein
said female side disconnecting part has a female side insulation layer (29) having an opening formed in a concave circular truncated cone shape, and a female side contacting part (18) disposed at the center of said female side insulation layer (29), and
said male side disconnecting part has a male side insulation layer (27) having a protrusion formed in a convex circular truncated cone shape and capable of being fitted into said opening of said female side insulation layer (29), and a male side contacting part (22) disposed at the center of said male side insulation layer (27) and capable of being brought into contact with said female side contacting part (18).

2. A switch gear, comprising
a plurality of main circuit devices (40-44) adjacently disposed, each comprising
(a) device elements (46) formed integrally or independently to each other within each of said main circuit devices (40-44); and
(b) a fitting portion having a female side fitting portion and a male side fitting portion;
wherein the female side and male side fitting portions of said main circuit devices (40-44) are capable of being fitted to the male side fitting portion of one of the adjacent main circuit devices and to the female side fitting portion of the other of the adjacent main circuit devices, respectively;
**characterized** in that
each of said device elements (46) being for three phases and being sealed with solid insulators;
a said fitting portion is connected to each of said device elements (46);
each said female side fitting portion has a female side insulation layer (47) having an opening formed in a concave circular truncated cone shape, and a female side contacting portion (48a) disposed at the center of said female side insulation layer (47); and
each said male side fitting portion has a male side insulation layer (52) having a protrusion formed in a convex circular truncated cone shape, and a male side contacting portion (54B) disposed at the center of said male side insulation layer (52).

3. The switch gear as set forth in claim 1 or 2, wherein said female side insulation layer (29; 47) and said male side insulation layer (27; 52) are each made of epoxy resin.

4. The switch gear as set forth in any of the preceding claims, wherein a resilient insulation layer (30; 59) is provided for being disposed between said female side insulation layer (29; 47) and said male side insulation layer (27; 52).

5. The switch gear as set forth in claim 4, wherein said resilient insulation layer (30; 59) is made of silicone gel.

6. The switch gear as set forth in claim 1, wherein each of said maiun circuit devices (12-15) is movably disposed on drawer rails (71a-71d) provided in each of said device chambers (70a-70d).

## Patentansprüche

1. Schaltgerät, das folgendes aufweist:
eine Vielzahl von Vorrichtungskammern (70a-70d), die nebeneinander angeordnet sind;
eine Hauptschaltkreisvorrichtung (12-15), die innerhalb jeder der Vorrichtungskammern (70a-70d) angeordnet ist;
Vorrichtungselemente (19), die integral oder unabhängig zueinander innerhalb der Schaltkreisvorrichtungen (12-15) ausgebildet sind;
ein Verbindungskabel (16, 18), das außerhalb der Vorrichtungskammern (70a-70d) angeordnet ist; und
Trennteile (9), die an jeder der Hauptschaltkreisvorrichtungen (12-15) angeordnet sind;
dadurch gekennzeichnet, daß
jedes der Vorrichtungselemente (19) für drei Phasen ist und mit Festkörperisolatoren (21) abgedichtet ist; und
weitere Trennteile (9) vorgesehen sind, die an einer Wand jeder der Vorrichtungskammern (70a-70d) angeordnet sind, wobei die Trennteile und die weiteren Trennteile zum Verbinden der Hauptschaltkreisvorrichtungen (12-15) und des Verbindungskabels (16, 18) vorgesehen sind und einen Innenseitentrennteil und einen Außenseitentrennteil haben; wobei
der Innenseitentrennteil eine Innenseitenisolierschicht (29) aufweist, der eine Öffnung hat, die in einer konkaven kreisförmigen abgestumpften konischen Form ausgebildet ist, und einen Innenseitenkontaktierteil (18), der in der Mitte der Innenseitenisolierschicht (29) angeordnet ist, und
der Außenseitentrennteil eine Außenseitenisolierschicht (27) aufweist, die einen Vorsprung hat, der in einer konvexen kreisförmigen abgestumpften konischen Form ausgebildet ist und in die Öffnung der Innenseitenisolierschicht (29) eingepaßt werden kann, und einen Außenseitenkontaktierteil (22), der in der Mitte der Außenseitenisolierschicht (27) angeordnet ist und in Kontakt mit dem Innenseitenkontaktierteil (18) gebracht werden kann.

2. Schaltgerät, das folgendes aufweist:
eine Vielzahl von Hauptschaltkreisvorrichtungen (40-44), die nebeneinander angeordnet sind, wobei jede Vorrichtung folgendes aufweist:
(a) Vorrichtungselemente (46), die integral oder unabhängig voneinander innerhalb jeder der Hauptschaltkreisvorrichtungen (40-44) ausgebildet sind; und
(b) einen Anschlußstückabschnitt mit einem Innenseitenanschlußstückabschnitt und einem Außenseitenanschlußstückabschnitt;
wobei die Innenseiten- und Außenseitenanschlußstückabschnitte der Hauptschaltkreisvorrichtungen (40-44) an den Außenseitenanschlußstückabschnitt einer der benachbarten Hauptschaltkreisvorrichtungen bzw. den Innenseitenanschlußstückabschnitt der anderen der benachbarten Hauptschaltkreisvorrichtungen angeschlossen werden kann;
dadurch gekennzeichnet, daß
jedes der Vorrichtungselemente (46) für drei Phasen ist und mit Festkörperisolatoren abgedichtet ist;
ein Anschlußstückabschnitt mit jedem der Vorrichtungselemente (46) verbunden ist;
jeder Innenseitenanschlußstückabschnitt eine Innenseitenisolierschicht (47) aufweist, die eine Öffnung hat, die in einer konkaven kreisförmigen abgestumpften konischen Form ausgebildet ist, und einen Innenseitenkontaktierabschnitt (48a), der in der Mitte der Innenseitenisolierschicht (47) angeordnet ist; und
jeder Außenseitenanschlußstückabschnitt eine Außenseitenisolierschicht (52) aufweist, die einen Vorsprung hat, der in einer konvexen kreisförmigen abgestumpften konischen Form ausgebildet ist, und einen Außenseitenkontaktierabschnitt (54B), der in der Mitte der Außenseitenisolierschicht (52) angeordnet ist.

3. Schaltgerät nach Anspruch 1 oder 2, wobei die Innenseitenisolierschicht (29; 47) und die Außenseitenisolierschicht (27; 52) jeweils aus Epoxydharz hergestellt sind.

4. Schaltgerät nach einem der vorangehenden Ansprüche, wobei eine elastische Isolierschicht (30; 59) dazu vorgesehen ist, damit sie zwischen der Innenseitenisolierschicht (29; 47) und der Außenseitenisolierschicht (27; 52) angeordnet ist.

5. Schaltgerät nach Anspruch 4, wobei die elastische Isolierschicht (30; 59) aus Siliziumgel hergestellt ist.

6. Schaltgerät nach Anspruch 1, wobei jede der Hauptschaltkreisvorrichtungen (12-15) beweglich auf Einschubschienen (71a-71d) angeordnet ist, die in jeder der Vorrichtungskammern (70a-70d) vorgesehen sind.

## Revendications

1. Coupe-circuit, comprenant:
plusieurs chambres de dispositif (70a-70d) disposées de manière contiguë;
un dispositif de circuit principal (12-15) disposé dans chacune desdites chambres de dispositif (70a-70d);
des éléments de dispositif (19) intégrés ou formés indépendamment dans lesdits dispositifs de circuit (12-15);
un câble de connexion (16, 18) disposé à l'extérieur desdites chambres de dispositif (70a-70d); et
des pièces de coupure (9) disposées sur chacun desdits dispositifs de circuit principal (12-15);
caractérisé par
le fait que chacun desdits éléments de dispositif (19) est prévu pour trois phases et est scellé par des isolateurs pleins (21); et
d'autres pièces de coupure (9) disposées sur une paroi de chacune desdites chambres de dispositif (70a-70d), lesdites pièces de coupure et lesdites autres pièces de coupure étant prévues pour connecter lesdits dispositifs de circuit principal (12-15) et ledit câble de connexion (16, 18) et présentant une pièce de coupure du côté femelle et une pièce de coupure du côté mâle; tandis que
ladite pièce de coupure du côté femelle présente une couche d'isolation (29) du côté femelle, qui présente une ouverture en forme de cône tronqué circulaire concave, et une pièce de contact (18) du côté femelle, disposée au centre de ladite couche d'isolation (29) du côté femelle, et
ladite pièce de coupure du côté mâle présente une couche d'isolation (27) du côté mâle présentant une saillie en forme de cône tronqué circulaire convexe et apte à être ajustée dans ladite ouverture de ladite couche d'isolation (29) du côté femelle, et une pièce de contact (22) du côté mâle disposée au centre de ladite couche d'isolation (27) du côté mâle et apte à être amenée en contact avec ladite pièce de contact (18) du côté femelle.

2. Coupe-circuit, comprenant:
plusieurs dispositifs de circuit principal (40, 44) disposés de manière contiguë, chacun comprenant:
(a) des éléments de dispositif (46) intégrés ou formés indépendamment dans chacun desdits dispositifs de circuit principal (40-44); et
(b) une partie d'ajustement présentant une partie d'ajustement du côté femelle, et une partie d'ajustement du côté mâle;
dans lequel les parties d'ajustement du côté femelle et du côté mâle desdits dispositifs de circuit principal (40-44) sont aptes à être ajustées respectivement sur la partie d'ajustement du côté mâle de l'un des dispositifs de circuit principal contigus et sur la partie d'ajustement du côté femelle de l'autre des dispositifs de circuit principal contigus,
caractérisé en ce que
chacun desdits éléments de dispositif (46) est prévu pour trois phases et est scellé par des isolateurs pleins;
une dite partie d'ajustement est connectée à chacun desdits éléments de dispositif (46);
chacune desdites parties d'ajustement du côté femelle présente une couche d'isolation (47) du côté femelle présentant une ouverture en forme de cône tronqué circulaire concave, et une partie de contact (48a) du côté femelle disposée au centre de ladite couche d'isolation (47) du côté femelle; et
chacune desdites parties d'ajustement du côté mâle présente une couche d'isolation (52) du côté mâle présentant une saillie en forme de cône tronqué circulaire convexe, et une partie de contact (54B) du côté mâle disposée au centre de ladite couche d'isolation (52) du côté mâle.

3. Coupe-circuit selon les revendications 1 ou 2, dans lequel ladite couche d'isolation (29; 47) du côté femelle et ladite couche d'isolation (27; 52) du côté mâle sont chacune réalisées en résine époxy.

4. Coupe-circuit selon l'une quelconque des revendications précédentes, dans lequel une couche d'isolation élastique (30; 59) est prévue pour être disposée entre ladite couche d'isolation (29; 47) du côté femelle et ladite couche d'isolation (27; 52) du côté mâle.

5. Coupe-circuit selon la revendication 4, dans lequel ladite couche d'isolation élastique (30; 59) est réalisée en gel de silicone.

6. Coupe-circuit selon la revendication 1, dans lequel chacun desdits dispositifs de circuit principal (12-15) est disposé de manière à pouvoir se déplacer sur des rails de tiroir (71a-71d) prévus dans chacune desdites chambres de dispositif (70a-70d).
